# EUROPEAN PATENT SPECIFICATION

(11) **EP 2 409 883 B1**
(45) Date of publication and mention of the grant of the patent: **07.06.2017**
(21) Application number: 11174024.7
(22) Date of filing: 14.07.2011
(51) Int. Cl.: G05G 1/30, B60T 7/06

(54) **Control pedal for vehicle**
Steuerpedal für ein Fahrzeug
Pédale de contrôle de véhicule

(30) Priority: 21.07.2010 IT TO20100627
(43) Date of publication of application: 25.01.2012
(73) Proprietor: Plastic Components and Modules Automotive S.p.A., 10137 Torino (TO) (IT)
(72) Inventor: Santoro, Giuseppe, 10137 Torino (IT)
(74) Representative: Rondano, Davide

(56) References cited:
- EP-A2- 0 256 466
- WO-A1-2004/031881
- DE-A1- 10 245 523
- US-A1- 2004 040 403
- US-A1- 2004 040 404
- US-A1- 2004 226 399
- US-B1- 6 324 939
- US-B1- 6 443 028

## Description

The present invention relates to a control pedal for a vehicle, such as for example a control pedal of the brakes of the vehicle itself, according to the preamble of claim 1.

A control pedal for a vehicle of the above-identified type is known from US 2004/226399 A1, as well as from US 2004/040403 A1.

Types of pedals are known providing at their inside the presence of a mechanism adapted to adjust the height of the pedal itself from the floor of the vehicle. This is made in order to adapt the stroke of the control pedal to the features of the vehicle on which the pedal is mounted and, furthermore, also to the features of the driver of the vehicle itself.

Such mechanism provides that the adjustment be made through a wormscrew, on which a slide is mounted which is moveable along the screw and is bound to the pedal. By turning the screw, the position of the slide is adjusted on the screw itself, and consequently the height of the pedal is adjusted. In general, the wormscrew is placed substantially perpendicular to the pedal arm, so that usually it is directly subject to the load transmitted by the pedal arm. Therefore, in order to realize a pedal structure as a whole, it is necessary to realize the wormscrew of metal or of a material of equivalent strength, in order to give it the suitable resistance to the aforementioned load.

The present invention obviates the aforementioned drawbacks by realizing a pedal structure in which the adjusting mechanism, for example provided with a wormscrew, is placed in a substantially parallel position with respect to the pedal arm, and in which the cinematic movement is a tilting movement of the pedal arm around a fulcrum made on the pedal body. The tilting movement is that which permits to adjust the height of the pedal from the floor of the car. This embodiment is subject to lower loads with respect to the known embodiments and permits to realize both the pedal arm and the pedal body of co-molded metal and plastic, and the wormscrew completely of plastic. This determines a greater lightness of these without a deterioration of mechanical performances.

The features and advantages of the pedal according to the present invention will be more clear from the following exemplary and non limitative description, made with reference to the annexed figures, in which respectively:

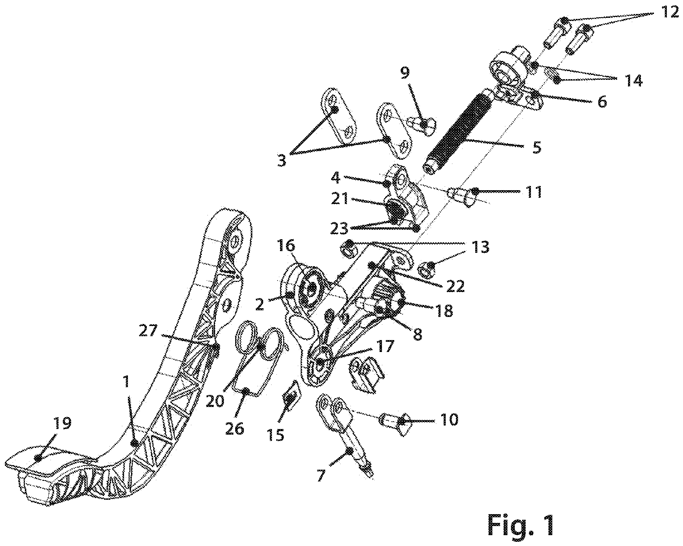

- figure 1 shows an exploded view of the whole structure of the pedal according to a first embodiment of the present invention;

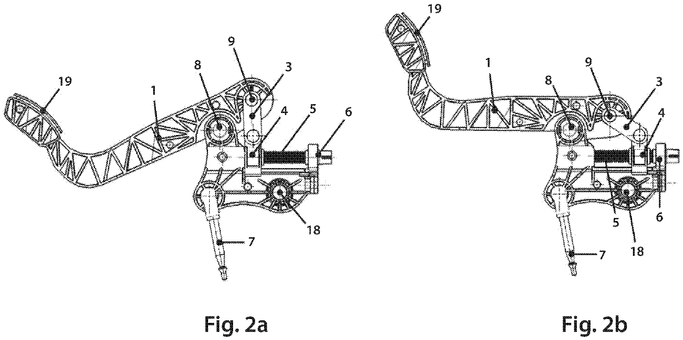

- figures 2a and 2b show a side view of the pedal of figure 1 in the conditions of minimum and maximum height with respect to the inner floor of the vehicle;

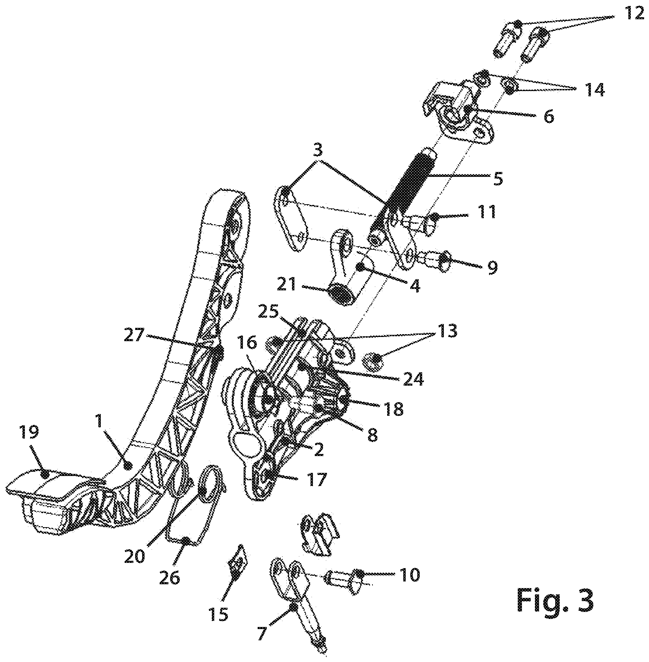

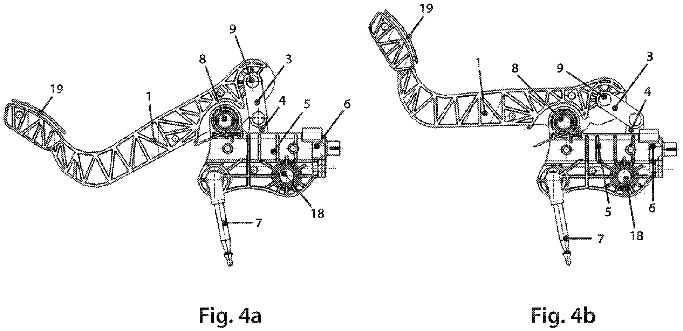

- figure 3 shows an exploded view of the whole structure of the pedal according to a second embodiment of the present invention.

With reference to the cited figures the pedal according to the present invention comprises a pedal arm 1, preferably made of co-molded metal and plastic. Such pedal arm comprises in its bottom part a pad 19 and in the top part a pin 8 for anchoring to an anchoring hole 16 of the pedal body.

The aforementioned pedal body essentially comprises fixing means for fixing the body itself to a car support, which fixing means consist in a hole 18 in which a corresponding pin is fixed, which permits the pedal body to turn in response to a pressure load on arm 1.

Said pressure load brings about actuation of a traditional actuation fork 7 for a pump, for example of the braking equipment of the vehicle.

Such fork is bound to the pedal body by means of a fork fixing hole 17 and a pin 10, so as to correctly receive the mechanical pressure from the rotation of the pedal body itself.

Associated with the pedal body and integrated with the same, according to the present invention there is provided an adjusting mechanism for adjusting the height of the pedal arm from the floor of the vehicle, wherein controlled sliding means, acting on which is a drawing slide 4 associated to the pedal arm, determine the adjustment of said height and wherein said sliding means are set substantially parallel to the pedal arm.

The movement of slide 4 along such sliding means 5 causes rotation of pedal arm 1 about the pin/rivet 8 thus varying the height thereof with respect to the floor of the vehicle.

The travel permitted to the slide upon such sliding means determines the available adjustment travel. Said slide is constrained to the pedal arm by interposition of two small connecting rods or of an engagement fork 3 constrained by corresponding engagement pins/rivets 9 and 11 to them.

Such controlled sliding means comprise a wormscrew which fits into an internally threaded sleeve 21 of said slide and which is longitudinally positioned on the pedal body. It is retained in a position parallel to the pedal arm by a retainer 6, fixed to the pedal body, associated to which are also means for setting such screw in rotation.

Such means are for example represented by a tachometric cable which transmits the rotation to the screw by means of a small electric motor.

The slide, as a result of the rotation of the wormscrew, slides in a guided way on the pedal body via guide means, which in the first embodiment are realized through a substantially flat sliding race 22, made on the pedal body in its lowest position and in parallel to the worm screw, on which race a pair of sliding blocks 23 of the slide itself engage.

In the second embodiment, the guide means are realized through a tubular element 24 that surrounds the wormscrew and in which the sleeve 21 can slide in a guided way. The tubular element is provided with a longitudinal groove 25 which permits the portion of the slide 4 which engages with the fork 3 to project from it.

In both embodiments, the load applied by the pad of pedal 19 is discharged from the slide to the guide, in the first embodiment on the flat guide and in the other circularly to the "tube" of the body. Therefore, in both cases the wormscrew is not subject to the load and can be made of plastic instead of metal, as it occurs in the traditional solutions of the prior art.

In both solutions a double coil spring 20 is also provided, anchored to the pedal body, with the axis of the coils being coaxial with the hole 16 connecting the pedal arm with the body and the bent edge 26, anchored to a hook provided on the pedal arm 27 itself.

This spring permits to take up the small clearances which possibly arise between the components of the crank mechanism formed by: pedal arm, small connecting rods, slide, pedal body and pins/rivets. In this way the whole system has a greater elastic stiffness and transmits a feeling of a greater strength to the driver's foot.

## Claims

1. A control pedal for a vehicle comprising:
a pedal body having a single anchoring hole (16),
a pedal arm (1) comprising in its bottom part a pad (19) and in the top part a pin (8) for anchoring to the anchoring hole (16),
wherein said pedal body comprises fixing means (18) for fixing the body itself, which means enable the pedal body to turn in response to a pressure load on the pedal arm (1), said load bringing about actuation of an actuation fork (7), and
wherein said pedal further comprises a mechanism for adjusting the height of the pedal arm (1) from the floor of the vehicle, wherein controlled sliding means (5), acting on which is a drawing slide (4) associated to the pedal arm (1), determine adjustment of said height and wherein said sliding means (5) are set substantially parallel to the pedal arm (1), **characterized in that**
the movement of the slide (4) along said sliding means (5) causes rotation of the pedal arm (1) about the anchoring pin (8), thus varying the height thereof with respect to the floor of the vehicle, and **in that**
said slide (4) is constrained to the pedal arm (1) by interposition of two connecting rods (3) or of an engagement fork (3) constrained by corresponding engagement pins (9,11) to the slide (4) and to the pedal arm (1).

2. Pedal according to claim 1, wherein said controlled sliding means (5) comprise a wormscrew positioned longitudinally on the pedal body, which fits into an internally threaded sleeve (21) of said slide (4).

3. Pedal according to claim 2, wherein, as a result of rotation of the wormscrew (5), the slide (4) slides in a guided way on the pedal body via guide means comprising a substantially flat race (22) made on the pedal body in its lowest position and in parallel to the wormscrew (5), on which a pair of sliding blocks (23) of the slide (4) itself engage.

4. Pedal according to claim 2, wherein, as a result of rotation of the wormscrew (5), the slide (4) slides in a guided way on the pedal body via guide means comprising a tubular element (24) that surrounds the wormscrew (5), in which the sleeve (21) can slide in a guided way.

5. Pedal according to claim 2, wherein the wormscrew (5) is made of plastic.

6. Pedal according to claim 1, wherein the pedal arm (1) and the pedal body are obtained by metal-plastic co-moulding.

## Patentansprüche

1. Steuerpedal für ein Fahrzeug, enthaltend:
einen Pedalkörper, der ein einzelnes Befestigungsloch (16) hat, einen Pedalarm (1), der in seinem unteren Teil eine Trittfläche (19) und in seinem oberen Teil einen Stift (8) zur Befestigung an dem Befestigungsloch (16) aufweist,
wobei der Pedalkörper eine Befestigungseinrichtung (18) zum Befestigen des Körpers selbst aufweist, welche Einrichtung das Schwenken des Pedalkörpers ansprechend auf eine Drucklast auf dem Pedalarm (1) ermöglicht, welche Last die Betätigung einer Betätigungsgabel (7) bewirkt, und
wobei das Pedal ferner einen Mechanismus zur Einstellung der Höhe des Pedalarms (1) von dem Fahrzeugboden aufweist, wobei eine gesteuerte Verschiebeeinrichtung (5), auf welche ein mit dem Pedalarm (1) verbundenes Gleitstück (4) einwirkt, die Einstellung der Höhe festlegt, und wobei die Verschiebeeinrichtung (5) im Wesentlichen parallel zu dem Pedalarm (1) eingerichtet ist, **dadurch gekennzeichnet, dass**
die Bewegung des Gleitstücks (4) entlang der Verschiebeeinrichtung (5) ein Schwenken des Pedalarms (1) um den Befestigungsstift (8) bewirkt, sodass dadurch dessen Höhe in Bezug auf den Fahrzeugboden verändert wird, und dadurch, dass
das Gleitstück (4) mit dem Pedalarm (1) durch Zwischenschaltung von zwei Verbindungsstangen (3) oder einer Eingriffsgabel (3) verbunden ist, die durch entsprechende Befestigungsstifte (9, 11) mit dem Gleitstück (4) und mit dem Pedalarm (1) verbunden sind.

2. Pedal nach Anspruch 1, wobei die gesteuerte Verschiebeeinrichtung (5) eine Gewindeschnecke umfasst, die in Längsrichtung an dem Pedalkörper angeordnet ist und welche in eine Innengewindebuchse (21) des Gleitstücks (4) passt.

3. Pedal nach Anspruch 2, wobei als Folge der Drehung der Gewindeschnecke (5) das Gleitstück (4) in geführter Weise an dem Pedalkörper über eine Führungseinrichtung gleitet, die eine an dem Pedalkörper in seiner untersten Position und parallel zu der Gewindeschnecke (5) hergestellte, im Wesentlichen flache Lauffläche (22) umfasst, mit welcher ein Paar Gleitblöcke (23) des Gleitstücks (4) selbst in Eingriff sind.

4. Pedal nach Anspruch 2, wobei als Folge der Drehung der Gewindeschnecke (5) das Gleitstück (4) in geführter Weise an dem Pedalkörper über eine Führungseinrichtung gleitet, die ein rohrförmiges Element (24) umfasst, das die Gewindeschnecke (5) umgibt, in welchem die Buchse (21) in geführter Weise gleiten kann.

5. Pedal nach Anspruch 2, wobei die Gewindeschnecke (5) aus Kunststoff hergestellt ist.

6. Pedal nach Anspruch 1, wobei der Pedalarm (1) und der Pedalkörper durch Metall-Kunststoff-Umspritzen erhalten werden.

## Revendications

1. Pédale de commande pour un véhicule comprenant :
un corps de pédale ayant un seul trou d'ancrage (16),
un bras de pédale (1) comprenant dans sa partie inférieure un tampon (19) et dans la partie supérieure une goupille (8) pour un ancrage au trou d'ancrage (16),
dans laquelle ledit corps de pédale comprend un moyen de fixation (18) pour fixer le corps lui-même, lequel moyen permet au corps de pédale de tourner en réponse à une charge de pression sur le bras de pédale (1), ladite charge entraînant l'actionnement d'une fourche d'actionnement (7), et
dans laquelle ladite pédale comprend en outre un mécanisme pour régler la hauteur du bras de pédale (1) à partir du plancher du véhicule, dans laquelle un moyen de coulissement commandé (5), agissant sur ce qui est un coulisseau de traction (4) associé au bras de pédale (1), détermine le réglage de ladite hauteur et dans laquelle ledit moyen de coulissement (5) est établi pour être sensiblement parallèle au bras de pédale (1),
**caractérisée en ce que**
le mouvement du coulisseau (4) le long dudit moyen de coulissement (5) provoque la rotation du bras de pédale (1) autour de la goupille d'ancrage (8), faisant ainsi varier sa hauteur par rapport au plancher du véhicule, et **en ce que**
ledit coulisseau (4) est retenu sur le bras de pédale (1) par l'interposition de deux bielles de liaison (3) ou d'une fourche de mise en prise (3) retenues par des goupilles de mise en prise (9, 11) correspondantes sur le coulisseau (4) et sur le bras de pédale (1).

2. Pédale selon la revendication 1, dans laquelle ledit moyen de coulissement commandé (5) comprend une vis sans fin positionnée longitudinalement sur le corps de pédale, qui s'ajuste sur un manchon à filetage interne (21) dudit coulisseau (4).

3. Pédale selon la revendication 2, dans laquelle, en conséquence de la rotation de la vis sans fin (5), le coulisseau (4) coulisse de façon guidée dans le corps de pédale par l'intermédiaire d'un moyen de guidage comprenant une course sensiblement plate (22) réalisée sur le corps de pédale dans sa position la plus basse et parallèlement à la vis sans fin (5), sur laquelle vient en prise une paire de blocs de coulissement (23) du coulisseau (4) lui-même.

4. Pédale selon la revendication 2, dans laquelle, en raison de la rotation de la vis sans fin (5), le coulisseau (4) coulisse de façon guidée sur le corps de pédale par l'intermédiaire d'un moyen de guidage comprenant un élément tubulaire (24) qui entoure la vis sans fin (5), dans lequel le manchon (21) peut coulisser de façon guidée.

5. Pédale selon la revendication 2, dans laquelle la vis sans fin (5) est constituée de plastique.

6. Pédale selon la revendication 1, dans laquelle le bras de pédale (1) et le corps de pédale sont obtenus par co-moulage métal-plastique.
